Europäisches Patentamt

European Patent Office

Office européen des brevets

(19)

(11) Veröffentlichungsnummer: **0 196 077**
**B1**

(12) **EUROPÄISCHE PATENTSCHRIFT**

(45) Veröffentlichungstag der Patentschrift:
31.01.90

(51) Int. Cl.⁴: **C 08 G 59/40**

(21) Anmeldenummer: **86104116.8**

(22) Anmeldetag: **25.03.86**

(54) **Härterlösung für Epoxidharzmassen.**

(30) Priorität: **26.03.85 DE 3510952**

(43) Veröffentlichungstag der Anmeldung:
**01.10.86 Patentblatt 86/40**

(45) Bekanntmachung des Hinweises auf die Patenterteilung:
**31.01.90 Patentblatt 90/5**

(84) Benannte Vertragsstaaten:
**AT BE DE FR GB IT SE**

(56) Entgegenhaltungen:
**DE-A- 2 166 606**
**DE-A- 2 649 402**
**GB-A- 2 028 338**

**Römpps Chemie Lexikon, Auflage 1981, S. 380**
**Ullmanns Encyklopädie der technischen Chemie, Band 9, Auflage 1975, S. 642 - 643**

(73) Patentinhaber: **SKW Trostberg Aktiengesellschaft,**
**Dr.-Albert-Frank-Strasse 32 Postfach 1150/1160,**
**D-8223 Trostberg (DE)**

(72) Erfinder: **Von Seyerl, Joachim, Griesseestrasse 5,**
**D-8221 Seeon (DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel**
**Postfach 860820, D-8000 München 86 (DE)**

## Beschreibung

Die Erfindung betrifft ein Verfahren zum Härten von Epoxidharzmassen.

Epoxidharze besitzen aufgrund ihrer hervorragenden Eigenschaften, wie hohe Schlagzähigkeit und Abriebfestigkeit, ausgezeichnetes Haftvermögen auf den meisten Werkstoffen sowie gute Licht-, Wasser- und Chemikalienbeständigkeit zahlreiche Anwendungsmöglichkeiten und werden u. a. als Lackharze, Gießharze und Bindemittel für gedruckte Schaltungen sowie für Klebstoffe und verstärkte Kunststoffe eingesetzt.

Auch zur Herstellung glasfaserverstärkter Laminate werden Epoxidharzmischungen hergestellt, die in der Regel aus einem üblichen Epoxidharz oder Epoxidharzgemisch, einem Härter und gegebenenfalls einem Härtungsbeschleuniger sowie einer bestimmten Menge eines Lösungsmittels bzw. eines Lösungsmittelgemisches zur Einstellung einer bestimmten Viskosität bestehen. Es ist aus der DE-OS 2 166 606 und der DE-OS 2 743 015 bekannt, Cyanamid in lösungsmittelfreien oder wasserhaltigen Systemen als Härter einzusetzen, jedoch nicht in wasserfreien Härterlösungen.

Für diesen Fall wird bekanntermaßen Dicyandiamid als Härter eingesetzt (vgl. beispielsweise hierzu US-PS 2 637 715 und US-PS 3 391 113), der gegebenenfalls noch Härtungsbeschleuniger wie z. B. Dimethylbenzylamin, 2-Methylimidazol oder Tetraalkylguanidine enthalten kann.

Ein Lösungsmittel bzw. das Lösungsmittelgemisch, welches die Aufgabe hat, alle Komponenten der Epoxidharzmischungen vollständig zu lösen, um somit eine homogene Verteilung auf dem zu imprägnierenden Gewebe sowie eine gleichmäßige Härtung des imprägnierten Gewebes zu erzielen, besteht gemäß der DD-PS 133 955 aus Glykolethern wie z. B. Methyl- oder Ethylglykol, die gemäß der DE-OS 3 026 706 noch andere Lösungsmittel wie z. B. aromatische Kohlenwasserstoffe, Alkylformamide oder Ketone enthalten können. Einer der Hauptnachteile bei der Verwendung von Dicyandiamid als Härter in einer flüssigen Epoxidharzmischung ist dessen schlechte Löslichkeit im Epoxidharz. Üblicherweise behilft man sich hierbei durch Verwendung von solchen Lösungsmitteln, welche Dicyandiamid in so hohem Maße lösen, daß auch durch Zugabe des Epoxidharzes bei der Herstellung des Harz-Härter-Lösungsmittelgemisches das Dicyandiamid nicht aus der Lösung auskristallisiert . Als Lösungsmittel kommen hierfür aufgrund des aus Verarbeitungsgründen eingeschränkten Siedebereichs im wesentlichen Monomethylglykolether oder Dimethylformamid in Frage. Aus verschiedenen Gründen ist jedoch der Einsatz dieser Lösungsmittel, mit denen auch nur begrenzte Harzkonzentrationen der Harz-Härter-Lösungsmittelgemische erreicht werden können, nicht unumstritten.

Der vorliegenden Erfindung liegt daher die Aufgabe zugrunde, eine Härterlösung für Epoxidharzmassen zu schafffen, welche die genannten Nachteile des Standes der Technik nicht ausweist, sondern besonders gute Löslichkeit im Epoxidharz und gute Verträglichkeit mit dem Epoxidharz besitzt. Diese Aufgabe wird erfindungsgemäß dadurch gelöst, daß man als Härter eine Lösung von Cyanamid im Gemisch mit Dicanadiamid in einem Gewichtsverhältnis von 2 : 8 bis 8 : 2 in wenigstens einem organischen Lösungmittel verwendet. Es hat sich nämlich überraschenderweise gezeigt, daß Cyanamid zusammen mti Dicyandiamid in Härterlösungen verwendet werden kann, ohne daß irgendwelche Nachteile bezüglich der Verträglichkeit mit dem Epoxidharz auftreten.

Es konnte ferner festgestellt werden, daß bei Verwendung dieser Mischung von Dicyandiamid und Cyanamid die Löslichkeit von Dicyandiamid in den Härterlösungen und Epoxidharz-Härterlösungs-Gemischen beträchtlich erhöht wird. Dies hat den Vorteil, daß auch Lösungsmittel eingesetzt werden können, die bislang aufgrund ihres zu geringen Lösungsmittelvermögens bezüglich Dicyandiamid nicht eingesetzt werden konnten.

Als weiterer überraschender Effekt wurde gefunden, daß die Kombination von Dicyandiamid und Cyanamid bezüglich der Härtungsgeschwindigkeit von Epoxidharzen synergistisch wirkt. Durch diesen Synergismus, der sich gleichbleibender Härtermenge, aber sich änderndem Gewichtsverhältnis von Dicyandiamid und Cyanamid in einer optimalen Gelierzeit äußert, kann zum Beispiel für eine gewünschte Gelierzeit gegenüber Dicyandiamid die Härtermenge oder die gegebenenfalls eingesetzte Menge eines üblichen Härtungsbeschleunigers reduziert werden.

Das Gewichtsverhältnis von Dicyandiamid zu Cyanamid ist in den obigen Grenzen variierbar, doch sollte das Verhältnis Dicyandiamid zu Cyanamid nicht größer als angegeben sein, da sonst die günstigen Lösungseigenschaften des Gemisches sowohl in der Härterlösung als auch im Epoxidharz verloren gehen.

Die bevorzugten Mischungsverhältnisse von Dicyandiamid zu Cyanamid betragen 3 : 7 bis 8 : 2.

Organische Lösungsmittel für die erfindungsgemäß verwendeten Härterlösungen lassen sich aus der grossen Vielzahl der dem Fachmann zur Verfügung stehenden Produkte leicht durch wenige einfache Vorversuche herausfinden. Aus verarbeitungstechnischen Gründen haben sich Monomethylglykol, 1-Methoxy-2-propanol, Dimethylformamid, Aceton, Methylethylketon oder Mischungen davon besonders bewährt und werden daher bevorzugt. Die Menge des Lösungsmittels bzw. der Lösungsmittelgemische wird vorzugsweise so gewählt, daß der Gehalt an Cyanamid bzw. Dicyandiamid und Cyanamid (Feststoffgehalt) 5 bis 30 Gew.-% beträgt.

Gegebenenfalls können noch ein oder mehrere der üblichen Härtungsbeschleuniger wie z. B. Dimethylbenzylamin in Mengen von 1 bis 10 Gew.-%, vorzugsweise 2 bis 5 Gew.-%, bezogen auf den Feststoffgehalt der Härterlösung, zugesetzt werden.

Die erfindungsgemäß verwendete Härterlösung, die über mehrere Wochen hinweg stabil ist, eignet sich hervorragend zur Herstellung von verarbeitungsstabilen Epoxidharzlösungen, die üblicherweise einen Epoxidgehalt zwischen 40 und 60 Gew.-% aufweisen und vorzugsweise zur Imprägnierung von faserverstärkten Geweben eingesetzt werden. Als Epoxidharze kommen alle üblichen auf dem Markt befindlichen Typen in Frage. So können beispielsweise Epoxidharze verwendet werden, die unter der Bezeichnung Epikote 828 oder Araldit LZ 7065 N-75 SP im Handel sind.

Die Härterlösung wird dem Epoxidharz, das gegebenenfalls schon in einem geeigneten Lösungsmittel gelöst sein kann, in einer solchen Menge zugesetzt, daß man einen Feststoffanteil der Härterlösung, bezogen auf den Epoxidharzgehalt von 1 bis 10 Gew.-%, erhält. Unter diesen Bedingungen tritt auch nach mehreren Tagen kein Auskristallisieren von Feststoffen oder eine Veränderung der Viskosität auf. Anstelle der Zugabe der fertigen Härterlösung ist es auch möglich, die Einzelkomponenten der erfindungsgemäß verwendeten Härterlösung, also Cynamid bzw. Dicyandiamid und Cyanamid, Lösungsmittel und gegebenenfalls Beschleuniger zum Epoxidharz bzw. dessen Lösung hinzuzugeben, d.h. die Lösung «in situ» zu erzeugen, ohne daß eine Kristallisation des Härters beobachtet wird.

Die Härtung der mit der erfindungsgemäßen Härterlösung gemischten Epoxidharzmassen erfolgt vorzugsweise in zwei Stufen. In der ersten Stufe wird bei 80 bis 160°C unter Verdampfung der Hauptmenge des Lösungmittels ein nichtklebender, sogenannter B-Zustand erreicht. In der zweiten Stufe wird das Harz dann bei Temperaturen von 140° bis 200°C in einer Zeit von 20 bis 60 Minuten ausgehärtet.

Die nachfolgenden Beispiele sollen die Erfindung näher erläutern, ohne sie jedoch darauf zu beschränken.

Beispiel 1

a) Es wurden folgende Härterlösungen mit einem Feststoffanteil von 10 Gew.-% hergestellt, wobei als Lösungsmittel Monomethylglykolether eingesetzt wird:

Härterlösung A
90 Gew.-Teile MG
10 Gew.-Teile DCD

Härterlösung B
90 Gew.-Teile MG
8 Gew.-Teile DCD
2 Gew.-Teile wasserfreies Cyanamid

Härterlösung C
90 Gew.-Teile MG
5 Gew.-Teile DCD
5 Gew.-Teile wasserfreies Cyanamid

Härterlösung D
90 Gew.-Teile MG
2 Gew.-Teile DCD
8 Gew. Teile wasserfreies Cyanamid

Härterlösung E
90 Gew.-Teile MG
10 Gew.-Teile wasserfreies Cyanamid

MG = Monomethylolglykolether
DCD = Dicyandiamid

b) Die bei Raumtemperatur klaren Lösungen werden 3 Wochen bei 40°C gelagert. Die analytische Überprüfung des Cyanamidgehaltes ergab keine Zersetzung des Cyanamids.

c) Es wurden Epoxidharzmassen unter Verwendung von Epoxidharz Araldit LZ 7065-75-SP (13,3 g), Härterlösung gemäß a) (3 g) und Methylglykol (1 g) hergestellt.

Die klar gelösten Mischungen veränderten während 4 Tagen Lagerung bei Raumtemperatur ihre Viskosität nicht.

Es ergaben sich bei 180°C folgende Gelierzeiten für die einzelnen Härterlösungen

A    5 Minuten
B    4 Minuten
C    3 Minuten 25 Sekunden
D    3 Minuten 30 Sekunden
E    4 Minuten

Beispiel 2

a) Es wurden Härterlösungen mit 10 Gew.-% Feststoffgehalt unter Verwendung von 1-Methoxy-2-propanol (MP) hergestellt.

Härterlösung F
90 Gew.-Teile MP
5 Gew.-Teile DCD
5 Gew.-Teile wasserfreies Cyanamid

Härterlösung G
90 Gew.-Teile MP
3 Gew.-Teile DCD
7 Gew.-Teile wasserfreies Cyanamid

Härterlösung H
90 Gew.-Teile MP
10 Gew.-Teile wasserfreies Cyanamid

MP = 1-Methoxy-2-propanol
DCD = Dicyandiamid

b) Die bei Raumtemperatur klaren Lösungen sind bezüglich Zersetzung über 3 Wochen lagerstabil.

c) Es wurden Epoxidharzmassen analog 1 c) unter Verwendung von 1-Methoxy-2-propanol als Lösungsmittel hergestellt. Die Harz-Härter-Lösungen sind mehr als 4 Tage lagerstabil und ergeben folgende Gelierzeiten bis 180°C:

F    4 Minuten 50 Sekunden
G    4 Minuten 30 Sekunden
H    4 Minuten 45 Sekunden

**Patentansprüche**

1. Verfahren zur Härtung von Epoxidharzmassen, dadurch gekennzeichnet, daß man eine Lösung von Dicyandiamid und Cyanamid im Gewichtsverhältnis von 2:8 bis 8:2 in wenigstens einem organischen Lösungsmittel zusetzt.

2. Verfahren nach Anspruch 1, dadurch gekennzeichnet, daß man eine Lösung mit einem Feststoffgehalt von 5 bis 30 Gew.-% verwendet.

3. Verfahren nach Anspruch 1 oder 2, dadurch gekennzeichnet, daß das Gewichtsverhältnis von Dicyandiamid zu Cyanamid 3 : 7 bis 8 : 2 beträgt.

4. Verfahren nach einem der vorhergehenden Ansprüche, dadurch gekennzeichnet, daß man als organisches Lösungsmittel ein oder mehrere aus der Gruppe Monomethylglykol, 1-Methoxy-2-propanol, Dimethylformamid, Aceton, Methylethylketon verwendet.

5. Verfahren nach einem der vorhergehenden Ansprüche, dadurch gekennzeichnet, daß man der Lösung 1 bis 10 Gew.-% eines Härtungsbeschleunigers, bezogen auf den Feststoffgehalt, zusetzt.

6. Verfahren nach Anspruch 5, dadurch gekennzeichnet, daß man der Lösung 2 bis 5 Gew.-% Härtungsbeschleuniger zusetzt.

7. Verfahren nach einem der vorhergehenden Ansprüche, dadurch gekennzeichnet, daß man die Härterlösung in einer Menge zugibt, die 1 bis 10 Gew.-% Feststoffgehalt, bezogen auf Epoxidharzgehalt, zusetzt.

8. Verfahren nach einem der vorhergehenden Ansprüche, dadurch gekennzeichnet, daß die Härterlösung im Epoxidharz bzw. der Epoxidharzlösung in situ durch Zugabe der Einzelkomponenten erzeugt wird.

9. Verfahren nach einem der vorhergehenden Ansprüche, dadurch gekennzeichnet, daß man die Mischung aus Epoxidharz und Härterlösung in einer ersten Stufe bei 80 bis 160°C unter Verdampfung der Hauptmenge des Lösungsmittels erhitzt und dann das Harz in einer zweiten Stufe bei einer Temperatur zwischen 140 und 200°C aushärtet.

## Claims

1. Process for the hardening of epoxide resin masses, characterised in that one adds a solution of dicyandiamide and cyanamide in a weight ratio of 2 : 8 to 8 : 2 in at least one organic solvent.

2. Process according to claim 1, characterised in that one uses a solution with a solids content of 5 to 30 wt.%.

3. Process according to claim 1 or 2, characterised in that the weigth ratio of dicyandiamide to cyanamide amounts to 3 : 7 to 8 : 2.

4. Process according to one of the preceding claims, characterised in that, as organic solvent, one uses one or more from the group monomethyl glycol, 1-methoxy-2-propanol, dimethylformamide, acetone, methyl ethyl ketone.

5. Process according to one of the preceding claims, characterised in that one adds to the solution 1 to 10 wt.% of a hardening accelerator, referred to the solids content.

6. Process according to claim 5, characterised in that one adds 2 to 5 wt.% of hardening accelerator to the solution.

7. Process according to one of the preceding claims, characterised in that one adds the hardener solution in an amount which introduces 1 to 10 wt.% solids content, referred to the epoxid resin content.

8. Process according to one of the preceding claims, characterised in that the hardener solution is produced in situ in the epoxide resin or epoxide resin solution by addition of the individual components.

9. Process according to one of the preceding claims, characterised in that one heats the mixture of epoxide resin and hardener solution in a first step at 80 to 160°C. with evaporation of the main amount of the solvent and then hardens in a second step at a temperature between 140 and 200°C.

## Revendications

1. Procédé pour le durcissement de compositions de résines époxydes, caractérisé en ce qu'on ajoute une solution de dicyandiamide et de cyanamide dans une proportion en poids de 2 : 8 à 8 : 2 dans au moins un solvant organique.

2. Procédé selon la revendication 1, caractérisé en ce que l'on utilise une solution présentant une teneur en matières solides de 5 à 30% en poids.

3. Procédé selon la revendication 1 ou 2, caractérisé en ce que le rapport en poids du dicyandiamide au cyanamide est de 3 : 7 à 8 : 2.

4. Procédé selon l'une des revendications précédentes, caractérisé en ce que l'on utilise, comme solvant organique, un ou plusieurs solvants du groupe: monométhyl-glycol, 1-méthoxy-2-propanol, diméthylformamide, acétone, méthyléthylcétone.

5. Procédé selon l'une des revendications précédentes, caractérisé en ce qu'on ajoute à la solution 1 à 10% en poids d'un accélérateur de durcissement, par rapport à la teneur en matières solides.

6. Procédé selon la revendication 5, caractérisé en ce qu'on ajoute à la solution 2 à 5% en poids d'accélérateur de durcissement.

7. Procédé selon l'une des revendications précédentes, caractérisé en ce qu'on ajoute la solution d'agent de durcissement en une quantité qui ajoute une teneur en matières solides de 1 à 10% en poids par rapport à la teneur en résine époxyde.

8. Procédé selon l'une des revendications précédentes, caractériseé en ce que la solution d'agent de durcissement est produite «in situ» par addition des composants individuels dans la résine époxyde ou respectivement la solution de résine époxyde.

9. Procédé selon l'une des revendications précédentes, caractérisé en ce qu'on chauffe le mélange de résine époxyde et de solution d'agent de durcissement dans une première étape à 80 jusqu'à 160°C avec évaporation de la quantité majeure du solvant et en ce qu'on durcit ensuite la résine dans une seconde étape à une température comprise entre 140 et 200°C.